# FASCICULE DE BREVET EUROPEEN

(11) **EP 1 272 891 B1**
(45) Date de publication et mention de la délivrance du brevet: **12.11.2003**
(21) Numéro de dépôt: 01917399.6
(22) Date de dépôt: 12.04.2001
(51) Int. Cl.: G02C 5/22

(54) **PROCEDE DE MONTAGE D'UNE CHARNIERE ELASTIQUE DE MONTURE DE LUNETTES ET CHARNIERE ELASTIQUE ADAPTEE POUR LA MISE EN OEUVRE DE CE PROCEDE**
VERFAHREN FÜR DIE MONTAGE EINES FEDERSCHARNIERS EINER BRILLE UND FEDERSCHARNIER GEEIGNET FÜR DIE DURCHFÜHRUNG DES VERFAHRENS
METHOD FOR MOUNTING A SPRUNG JOINT OF THE FRAME OF SPECTACLES AND SPRUNG JOINT ADAPTED THEREFOR

(30) Priorité: 14.04.2000 EP 00420074
(43) Date de publication de la demande: 08.01.2003
(73) Titulaire: CHEVASSUS S.A., F-39400 Morez (FR)
(72) Inventeur: DESBIEZ-PIAT, Christophe, F-88700 Rambervillers (FR)
(74) Mandataire: Moinas, Michel
(86) Numéro de dépôt international: IB0100614
(87) Numéro de publication internationale: WO01079917

(56) Documents cités:
- EP-A- 0 340 161
- WO-A-97/45764
- WO-A-98/43127
- DE-U- 9 306 387
- FR-A- 2 609 816
- FR-A- 2 664 990
- FR-A- 2 741 459

## Description

L'invention se rapporte à un procédé de montage d'une charnière élastique de monture de lunettes et à une charnière élastique adaptée pour la mise en oeuvre d'un tel procédé.

Plus particulièrement, l'invention se rapporte à un procédé de montage d'une charnière élastique de monture de lunettes, comprenant une étape pour mettre en place un poussoir à ressort dans un premier composant et une 'étape pour articuler le premier composant à un deuxième composant par un axe de rotation. Le montage est tel qu'une branche de la monture, solidaire de l'un des composants, pivote par rapport à une face de la monture solidaire de l'autre composant en déplaçant le poussoir en translation dans le premier composant contre la compression du ressort.

Dans ce type de montage bien connu, on repousse le poussoir contre la compression du ressort pour articuler les deux composants avec l'axe de rotation. Le retrait où la perte de l'axe de rotation libère le poussoir, lequel s'échappe hors du premier composant par la détente du ressort. On risque ainsi de perdre le poussoir et le ressort, étant entendu que ces pièces sont de petites dimensions.

Pour palier cet inconvénient, le document FR 2 519 434, publié le 8 juillet 1983, décrit un procédé de montage d'une charnière élastique de monture de lunettes, dans lequel, après l'étape de mise en place du poussoir, on insère une goupille de verrouillage dans le poussoir pour le retenir dans le premier composant contre la compression du ressort. Cette goupille est retirée après l'étape d'articulation des composants à l'aide de l'axe de rotation. Autrement dit, cet agencement est conçu pour retenir le poussoir temporairement, lors du montage ou du démontage de la charnière élastique. En cas de perte de l'axe de rotation pendant l'utilisation de la monture, le poussoir s'échappe du premier composant par la détente du ressort de compression.

Le document FR 2 334 808, publié le 8 juillet 1977, décrit un procédé de montage d'une charnière élastique de monture optique dans lequel on introduit le poussoir et le ressort dans un boîtier et l'on chausse à chaud le boîtier dans un premier composant de la monture avant d'articuler ce dernier à un deuxième composant par un axe de rotation. L'étape par laquelle on solidarise le boîtier au premier composant est nécessaire pour refermer le boîtier et ainsi empêcher en permanence le poussoir de s'échapper en cas de retrait ou de perte de l'axe de rotation. De surcroît, un boîtier distinct du premier composant complique la conception de la charnière élastique elle-même.

Le document US 5 515 575, publié le 14 mai 1996, décrit un autre procédé de montage d'une charnière élastique de monture de lunettes permettant de retenir en permanence le poussoir dans l'un des composants de la charnière. Selon ce document, on met en place le poussoir en le faisant coulisser dans une ouverture du composant contre la compression du ressort. Lors de cette étape, il est nécessaire d'introduire des ergots du poussoir dans des gorges correspondantes de l'ouverture du composant. Puis l'on fait subir au poussoir une rotation par exemple de 90 degrés pour décaler les ergots par rapport aux gorges de sorte que le poussoir est retenu en permanence dans le composant. La mise en place du poussoir dans le composant nécessite donc une étape de rotation du poussoir. Un poussoir muni d'ergots et un composant ayant une ouverture munie de gorges correspondantes compliquent là aussi la conception de la charnière élastique elle-même.

L'un des buts de l'invention est d'apporter une simplification par rapport aux procédés connus de montage d'une charnière élastique de monture de lunettes dont un des composants comprend un poussoir à ressort. L'invention vise plus particulièrement une simplification de l'étape de mise en place du poussoir dans le composant, compte tenu de l'exigence de retenir en permanence le poussoir dans le composant. L'invention vise également un procédé qui apporte une simplification lors du démontage de la charnière élastique. L'invention vise encore un procédé de montage d'une charnière élastique qui apporté une simplification de conception de la charnière elle-même, notamment par rapport au poussoir et au composant dans lequel il est mis en place.

A cet effet, l'invention a pour objet un procédé de montage d'une charnière élastique de monture de lunettes, tel que défini dans la revendication 1, comprenant une étape pour mettre en place un poussoir à ressort dans un premier composant et une étape pour articuler le premier composant à un deuxième composant par un axe de rotation de telle sorte qu'une branche de la monture, solidaire de l'un des composants, pivote par rapport à une face de la monture solidaire de l'autre composant en déplaçant le poussoir dans le premier composant contre la compression du ressort, caractérisé en ce que l'on ouvre le premier composant par déformation élastique, l'on introduit le poussoir à ressort dans le premier composant, et l'on referme ce dernier autour du poussoir de façon à le retenir par pincement élastique contre la compression du ressort.

Avec ce procédé, le composant se referme comme une pince élastique autour du poussoir de façon à le retenir en butée contre la compression du ressort. Bien entendu, le premier composant est susceptible de se refermer par pincement élastique autour du poussoir lorsque ce dernier est suffisamment introduit dans le premier composant. Après l'introduction du poussoir dans le composant, il n'est pas nécessaire d'imposer une rotation supplémentaire du poussoir par rapport au composant pour l'empêcher de s'échapper de ce dernier. La conception du poussoir est aussi plus simple, puisqu'il n'est pas nécessaire de prévoir des moyens de retenue sur le poussoir lui-même. De surcroît, le poussoir est retenu en permanence par le composant dans lequel il est mis en place, sans pour autant imposer de monter le poussoir dans un boîtier et de fermer ce dernier en le fixant au composant.

Selon un mode avantageux de réalisation de l'invention, on force en ouverture le premier composant à l'aide du poussoir jusqu'à ce que ce composant se referme par pincement élastique autour du poussoir. Ce mode de réalisation simplifie encore le montage de la charnière élastique en faisant jouer au poussoir le rôle d'outil de déformation élastique du premier composant.

D'autres avantages de l'invention apparaîtront à la lecture de la description de deux modes de réalisation illustrés par les dessins.

Les figures 1A à 1C illustrent une charnière élastique de monture de lunettes selon l'invention, respectivement lorsqu'une branche de la monture est en position fermée, en position d'ouverture normale et en position d'ouverture au-delà de la position d'ouverture normale.

Les figures 2A à 2D illustrent une étape d'un procédé selon l'invention permettant de mettre en place un poussoir à ressort dans l'un des deux composants de la charnière élastique.

Les figures 3A à 3C illustrent différentes formes du composant et du poussoir d'une charnière élastique adaptée pour être montée selon le procédé de montage illustré par les figures 2A à 2D.

Les figures 4A à 4D illustrent une étape d'un procédé selon l'invention permettant d'articuler un premier composant à un deuxième composant par un axe de rotation.

Les figures 5A et 5B illustrent dans deux plans de coupe différents, celui des composants de la charnière élastique représentée par les figures 1A à 1C recevant un poussoir à ressort.

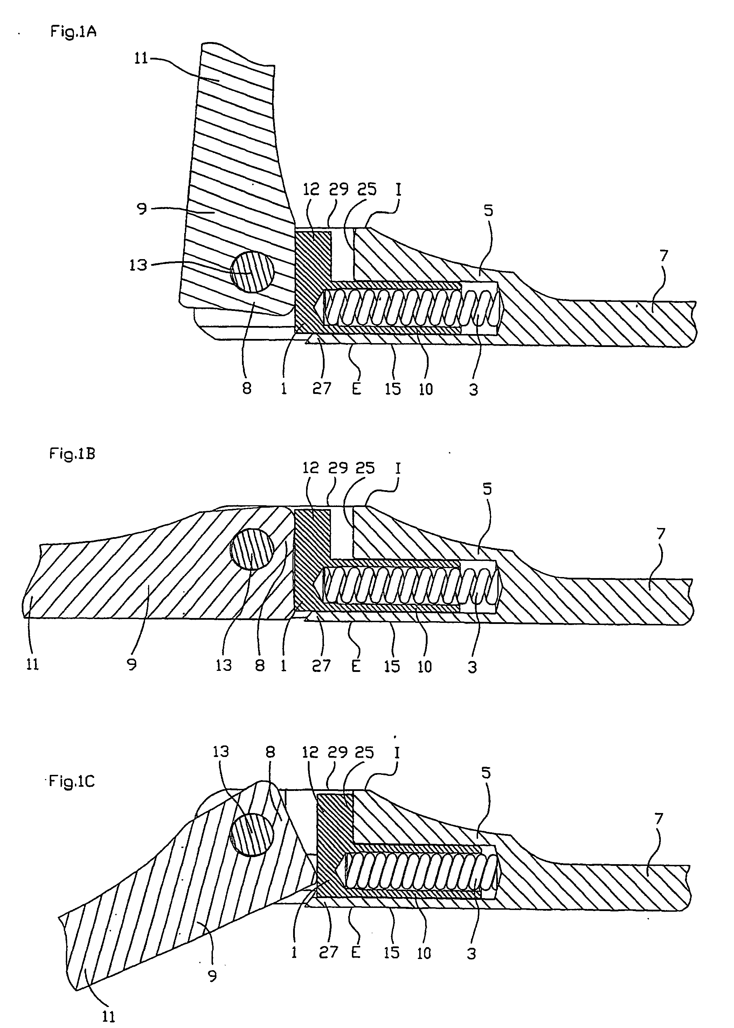

Une charnière élastique de monture de lunettes comprend, figures 1A à 1C, un premier 5 et un deuxième 9 composants articulés par un axe de rotation 13. Un poussoir 1 à ressort 3 est disposé dans le premier composant 5 de telle sorte qu'une branche 11 de la monture solidaire de l'un 9 des deux composants pivote par rapport à un tenon de face 7 solidaire de l'autre 5 composant en déplaçant le poussoir 1 en translation dans le premier composant 5 contre la compression du ressort 3.

De façon bien connue, le deuxième composant 9 possède un chamon 8 conformé en came pour que la compression du ressort passe par un maximum lorsque la branche pivote d'une position de fermeture, illustrée par la figure 1A, à une position d'ouverture normale, illustrée par la figure 1B. Ainsi, le poussoir tend à rappeler la branche dans la position de fermeture, respectivement d'ouverture normale, lorsque le pivotement est en deçà, respectivement au-delà, du pivotement correspondant à la compression maximale du ressort. Comme illustré par la figure 1C, la forme en came du chamon 8 du deuxième composant 9 permet également au poussoir de rappeler la branche dans la position d'ouverture normale lorsqu'elle est actionnée en pivotement au-delà de cette position.

Un procédé de montage de la charnière décrite précédemment comprend une étape pour mettre en place le poussoir 1 à ressort 3 dans le premier composant 5 et une étape pour articuler le premier composant 5 au deuxième composant 9 par un axe de rotation 13.

Selon l'invention, on ouvre le premier composant 5 par déformation élastique, l'on introduit le poussoir 1 à ressort 3 dans le premier composant 5, et l'on referme ce dernier 5 autour du poussoir 1 de façon à le retenir par pincement élastique contre la compression du ressort 3.

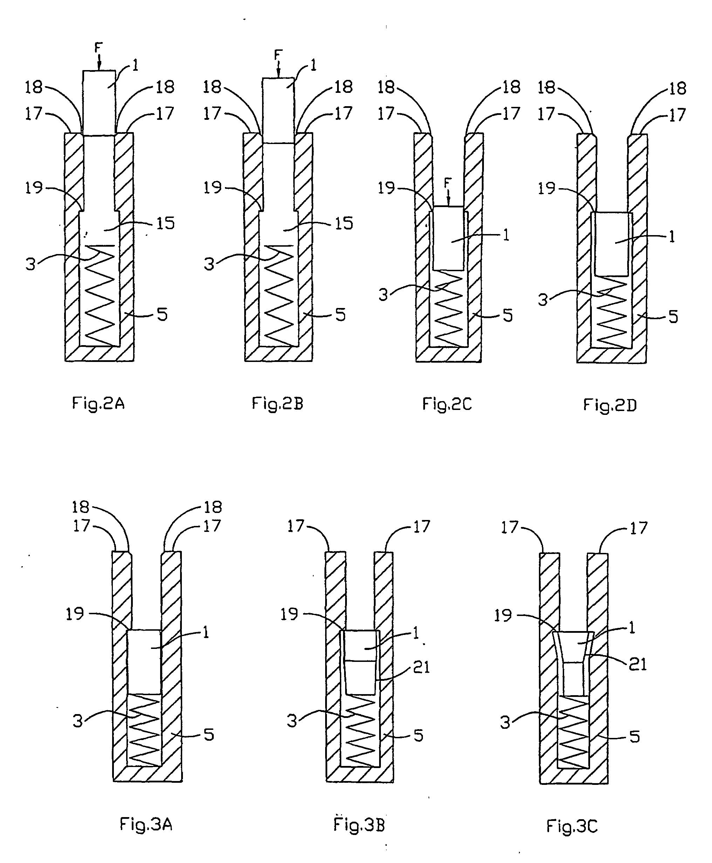

Dans le mode de réalisation de l'invention illustré par les figures 2A à 2D, on force en ouverture le premier composant 5 à l'aide du poussoir 1 jusqu'à ce que ce composant 5 se referme par pincement élastique autour du poussoir. Plus particulièrement, figure 2A, on dispose le ressort 3 dans un logement 15 du premier composant 5 et on dispose le poussoir 1 en appui sur deux chamons 17 du premier composant 5. Le logement 15 s'ouvre sur l'espace de séparation des deux chamons 17, lesquels font saillie par rapport au logement 15. On applique, figure 2B, un effort F sur le poussoir 1 pour écarter les deux charnons 17 et le logement 15, autrement dit pour ouvrir le premier composant 5 par déformation élastique. Puis l'on introduit, figure 2C, le poussoir dans le logement 15 jusqu'à ce que ce dernier se referme sur le poussoir 1 par pincement élastique et retienne ainsi, figure 2D, le poussoir dans le premier composant 5 contre la compression du ressort 3.

Comme visible sur la figure 2D, le poussoir 1 est en permanence retenu dans le premier composant 5 de la charnière, même lorsque les deux composants 5 et 9 ne sont pas articulés par l'axe de rotation 13. En cas de retrait ou de perte de l'axe de rotation 13, le poussoir 1 ne peut pas s'échapper du premier composant 5. De surcroît, le retrait du poussoir 1 est obtenu facilement en ouvrant légèrement par déformation élastique le premier composant 5.

Dans une charnière élastique de monture de lunettes adaptée pour être montée selon le procédé de l'invention, le logement 15 du premier composant 5 se déforme de façon élastique lorsque le poussoir 1 est introduit dans ce logement 15 qui possède, comme visible sur la figure 2A ou 3A, un ou deux décrochements 19 formant une butée de retenue du poussoir 1 contre la compression du ressort 3 lorsque le premier composant 5 et le logement 15 se referment de façon élastique autour du poussoir 1.

De préférence, comme visible sur la figure 3B, le poussoir 1 possède un chanfrein 21 pour faciliter l'ouverture par déformation élastique du premier composant 5. On prévoit également de former un chanfrein 18 sur chaque charnon 17 du premier composant 5 pour faciliter son ouverture par déformation élastique lors de l'introduction du poussoir 1.

On prévoit également de donner une forme correspondante entre les décrochements 19 du premier composant 5 et le chanfrein 21 du poussoir 1, comme visible sur la figure 3C. Cet agencement facilite la réalisation du logement 15.

A l'issue de l'étape de mise en place du poussoir 1 dans le premier composant 5, on repousse le poussoir 1 contre la compression du ressort 3 à l'aide du deuxième composant 9 pour aligner le perçage des chamons 17 et 8 des deux composants et insérer l'axe de rotation 13 permettant d'articuler les deux composants.

De préférence, le perçage des chamons 17 du premier composant 5 est distant du ou des décrochements 19 du logement 15 de façon à limiter un décalage axial du perçage du chamon 8 du deuxième composant 9 et ainsi limiter la compression du ressort 3 lorsque l'on aligne les perçages. Cette limitation est telle qu'elle permet d'articuler les deux composants 5 et 9 par une vis 13 sans nécessiter de repousser au préalable le poussoir 1 à l'aide du deuxième composant 9. Lorsque les deux composants 5 et 9 sont articulés par la vis 13, le poussoir 1 est précontraint par le ressort 3 et exerce en permanence une pression du contact sur le chamon 8 du deuxième composant 9.

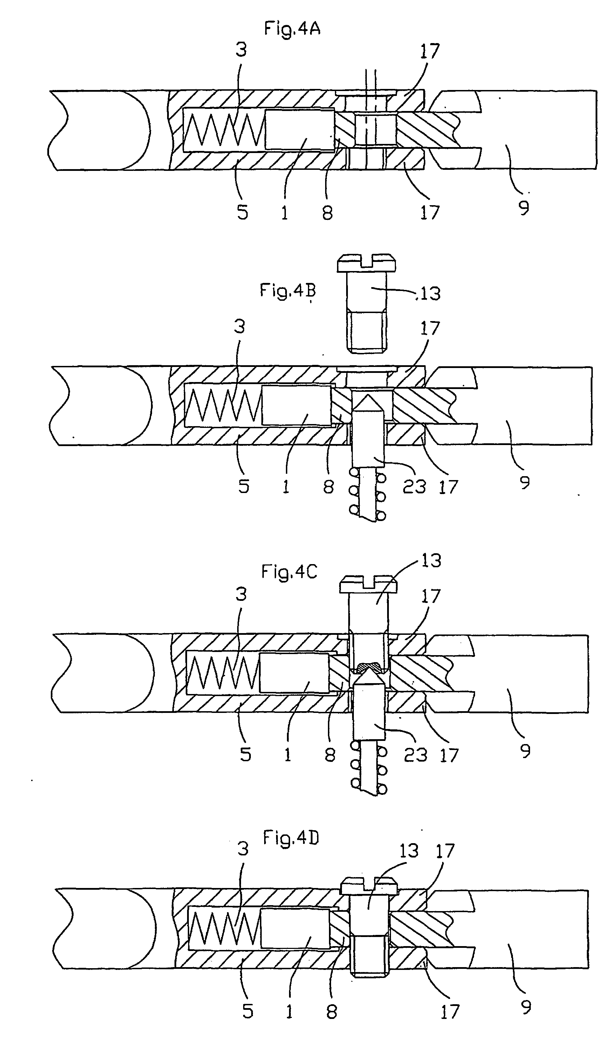

Les figures 4A à 4D illustrent l'étape d'articulation des deux composants 5 et 9. La figure 4A illustre plus particulièrement un faible décalage entre les perçages des charnons 17 du premier composant 5 et du chamon 8 du deuxième composant 9 alors que ce dernier n'exerce pas de pression sur le poussoir 1 à l'encontre du ressort 3. Les figures 4B et 4C illustrent l'alignement des perçages à l'aide d'une pointe 23 et l'insertion d'une vis d'articulation 13. La figure 4D illustre l'insertion complète et le vissage de la vis 13 dans l'un des chamons 17 du premier composant 5.

Il est prévu de remplacer la vis d'articulation 13 par un axe muni d'une tête à une extrémité et d'un chanfrein à l'extrémité opposée pour aligner les perçages des chamons des deux composants sans utiliser une pointe supplémentaire. L'extrémité opposée à la tête est ensuite déformée par une technique de rivetage. Il est envisagé encore de souder cette extrémité au premier composant de la charnière.

Selon un autre mode de réalisation de l'invention, le premier composant 5 possède un logement 15 recevant une partie longitudinale 10 du poussoir 1 en étant décalé par rapport à l'axe de rotation 13 et ouvert 29 pour recevoir une partie transversale 12 du poussoir 1 pressée contre le deuxième composant 9 par la compression du ressort 3.

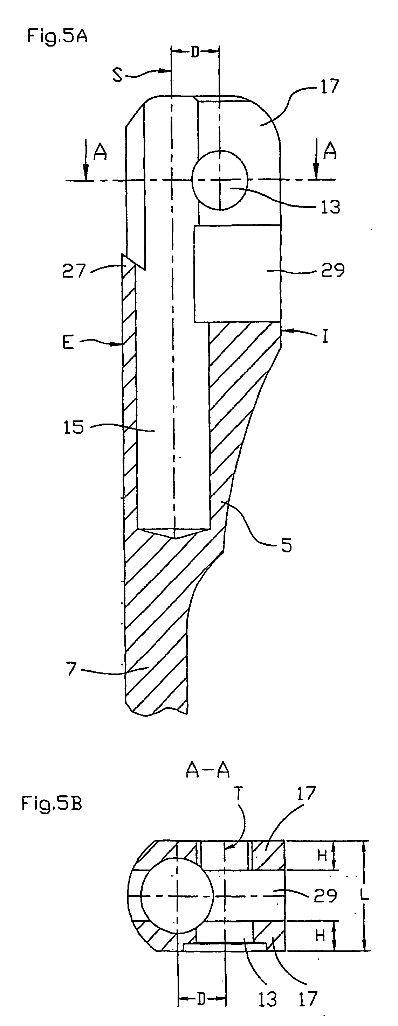

Comme bien visible sur les figures 5A et 5B, la direction axiale S du logement 15 est décalée d'une distance D par rapport à la direction axiale de perçage T de deux chamons 17 du premier composant 5 recevant l'axe de rotation 13. Le décalage D permet de fileter le perçage du premier composant sur la totalité, ou moins de la totalité si désiré, de l'épaisseur H des charnons 17 sans qu'il soit nécessaire de compenser une perte d'épaisseur de filetage due à l'usinage du logement 15. On contribue ainsi à diminuer la largeur totale L du premier composant parallèlement à l'axe de rotation 13.

Comme visible sur les figures 1A à 1C et 5A, le logement 15 du premier composant 5 est de préférence fermé sur un côté E et ne reçoit la partie transversale 12 du poussoir 1 que par une ouverture 29 sur le côté opposé I, le poussoir ayant alors une forme en L.

La fermeture latérale du premier composant 15 est obtenue par une paroi 27 du logement 15 guidant la partie longitudinale 10 du poussoir 1 et se prolongeant dans la continuité du chamon 8 du deuxième composant 9 lorsque la branche est en position d'ouverture normale, comme illustré par la figure 1B. Si la paroi de guidage 27 est disposée du côté E du premier composant qui correspond au côté extérieur de la monture, c'est-à-dire le côté qui est vu par un tiers lorsque la monture est portée par un utilisateur, le poussoir 1 n'est plus visible de ce côté extérieur lorsque la branche est en position d'ouverture normale. On ajoute ainsi à l'esthétique générale de la monture de lunettes.

Le poussoir en L est obtenu à partir d'un profilé en forme de serrure sur lequel on usine au tour la partie longitudinale 10 en décalant l'axe de tournage par rapport à l'axe du profilé. Le poussoir peut être percé pour recevoir le ressort et réduire ainsi en proportion le logement du premier composant dans la direction longitudinale S.

Il est intéressant d'assembler le ressort et le poussoir de façon à former un mécanisme en une seule pièce. On peut réaliser un perçage étagé dans le poussoir, le diamètre de perçage étant inférieur au diamètre du ressort sur une courte longueur. Dans le cas d'un poussoir plein, on réalise un téton dont le diamètre est supérieur au diamètre de noyau du ressort.

Il faut noter que le logement 15 du premier composant peut être ouvert des deux côtés E et I pour recevoir un poussoir 1 dont les parties longitudinale 10 et transversale 12 forment un T.

Il faut aussi noter que dans les exemples d'illustration 1A à 1C, le premier composant 5 comprend une butée arrière 25 pour limiter la compression du ressort 3 lors du pivotement de la branche 11 par rapport au tenon de face 7 de la monture.

## Revendications

1. Procédé de montage d'une charnière élastique de monture de lunettes, comprenant une étape pour mettre en place un poussoir (1) à ressort (3) dans un premier composant (5) et une étape pour articuler le premier composant (5) à un deuxième composant (9) par un axe de rotation (13) de telle sorte qu'une branche (11) de la monture, solidaire de l'un (9) des composants, pivote par rapport à une face de la monture solidaire de l'autre composant (5) en déplaçant le poussoir (1) dans le premier composant (5) contre la compression du ressort (3), le premier composant (5) comprenant un logement (15) destiné à recevoir le poussoir (1) à ressort (3) et deux charnons (17) en saillie par rapport au logement (15), **caractérisé en ce que** l'on ouvre le premier composant (5) par déformation élastique en écartant les deux charnons (17) et le logement (15) et l'on introduit le poussoir (1) à ressort (3) dans le logement (15) du premier composant (5) jusqu'à ce que le logement (15) se referme autour du poussoir (1) de façon à le retenir par pincement élastique contre la compression du ressort (3).

2. Procédé de montage selon la revendication 1, **caractérisé en ce que** l'on force en ouverture le premier composant (5) à l'aide du poussoir (1).

3. Charnière élastique de monture de lunettes adaptée pour être montée selon le procédé de montage de la revendication 1 ou 2, comprenant un premier (5) et un deuxième (9) composants articulés par un axe de rotation (13) de telle sorte qu'une branche (11) de la monture, solidaire de l'un (9) des composants, pivote par rapport à une face de la monture solidaire de l'autre composant en déplaçant un poussoir (1) à ressort (3) disposé dans un logement (15) du premier composant (5) contre la compression d'un ressort (3), le premier composant comprenant deux charnons (17) en saillie par rapport au logement (15), **caractérisée en ce que** les deux charnons (17) et le logement (15) s'écartent pour ouvrir le premier composant (5) de façon élastique lorsque le poussoir (1) est introduit dans ce logement, lequel est pourvu d'un ou deux décrochements (19) formant une butée de retenue du poussoir (1) contre la compression du ressort (3) lorsque le logement (15) du premier composant (5) se referme par pincement élastique autour du poussoir (1).

4. Charnière élastique selon la revendication 3, **caractérisée en ce que** le poussoir (1) possède un chanfrein (21) pour faciliter l'ouverture par déformation élastique du premier composant (5).

5. Charnière élastique selon la revendication 3, **caractérisée en ce que** le premier composant (5) possède des chanfreins (18) pour faciliter son ouverture par déformation élastique.

6. Charnière élastique selon les revendications 3 et 4, **caractérisée en ce que** les décrochements (19) du premier composant (5) et le chanfrein (21) du poussoir (1) ont une forme correspondante.

7. Charnière élastique selon la revendication 3, **caractérisée en ce qu'**un perçage du premier composant (5) pour l'axe de rotation (13) est distant du ou des décrochements (19) du logement (15) de façon à limiter un décalage axial par rapport à un perçage pour l'axe de rotation (13) du deuxième composant (9).

8. Charnière élastique selon la revendication 3, **caractérisée en ce que** le premier composant (5) possède un logement (15) recevant une partie longitudinale (10) du poussoir (1) en étant décalé par rapport à l'axe de rotation (13) et ouvert (29) pour recevoir une partie transversale (12) du poussoir (1) pressée contre le deuxième composant (9) par la compression du ressort (3).

9. Charnière élastique selon la revendication 8, **caractérisée en ce que** le logement (15) du premier composant (5) est fermé d'un côté (E) et ne reçoit la partie transversale (12) du poussoir (1) que par une ouverture (29) du côté opposé (I), le poussoir (10,12) ayant une forme de L.

10. Charnière élastique selon la revendication 9, **caractérisée en ce que** le logement (15) est fermé par une paroi (27) du logement (15) guidant la partie longitudinale (10) du poussoir (1) et se prolongeant dans la continuité du deuxième composant (9) lorsque la branche (11) est en position d'ouverture normale.

11. Charnière élastique selon la revendication 9 ou 10, **caractérisée en ce que** le logement (15) est fermé sur un côté (E) du premier composant qui correspond au côté de la monture vu par un tiers lorsque la monture est portée par un utilisateur.

## Patentansprüche

1. Verfahren zum Zusammenbau eines Federscharniers eines Brillengestells mit einem Verfahrensschritt zum Anbringen eines mit einer Feder (3) versehenen Stößels (1) in einem ersten Bestandteil (5) und einem Verfahrensschritt zum Anlenken des ersten Bestandteils (5) an einen zweiten Bestandteil (9) mittels einer Rotationsachse (13) auf eine Weise, dass ein fest mit einem der Bestandteile (9) verbundener Arm (11) des Gestells bezüglich einer fest mit dem anderen Bestandteil (5) verbundenen Gestellseite den Stößel (1) in dem ersten Bestandteil (5) entgegen der Kraft der Feder (3) versetzt, wobei der erste Bestandteil (5) einen zur Aufnahme des mit der Feder (3) versehenen Stößels (1) vorgesehenen Sitz (15) sowie zwei dem Sitz (15) gegenüber vorspringende Scharnierabschnitte (17) aufweist, **dadurch gekennzeichnet, dass** der erste Bestandteil (5) durch elastisches Verbiegen unter Auseinanderspreizen der beiden Schamierabschnitte (17) und des Sitzes (15) geöffnet und der mit der Feder (3) versehene Stößel (1) in den Sitz (15) des ersten Bestandteils (5) eingeführt wird, bis sich der Sitz (15) auf eine Weise um den Stößel (1) wieder schließt, dass dieser entgegen der Kraft der Feder (3) durch elastisches Verklemmen gehalten wird.

2. Verfahren zum Zusammenbau gemäß Anspruch 1, **dadurch gekennzeichnet, dass** der erste Bestandteil (5) mit Hilfe des Stößels (1) geöffnet wird.

3. Federscharnier eines Brillengestells, das zum Zusammenbau gemäß dem Verfahren der Ansprüche 1 oder 2 eingerichtet ist, mit ersten (5) und zweiten (9) Bestandteilen, die über eine Rotationsachse (13) aneinander auf eine Weise angelengt sind, dass ein fest mit einem (9) der Bestandteile verbundener Arm (11) des Gestells bezüglich einer fest mit dem anderen Bestandteil verbundenen Gestellseite verschwenkbar ist und dabei einen mit einer Feder (3) versehenen Stößel (1), der in einem Sitz (15) des ersten Bestandteils (5) angeordnet ist, entgegen der Kraft einer Feder (3) versetzt, wobei der erste Bestandteil zwei dem Sitz (15) gegenüber hervorspringende Scharnierabschnitte (17) aufweist, **dadurch gekennzeichnet, dass** die beiden Scharnierabschnitte (17) und der Sitz (15) zum Öffnen des ersten Bestandteils (5) federnd auseinandergespreizt werden, sobald der Stößel (1) in diesen Sitz eingeführt wird, wobei der Sitz einen oder zwei Auslösehaken (19) aufweist, die für den Stößel (1) einen entgegen der Kraft der Feder (3) wirkenden Haltanschlag ausbilden, sobald sich der Sitz (15) des ersten Bestandteils (5) um den Stößel (1) unter elastischem Verklemmen wieder schließt.

4. Federscharnier gemäß Anspruch 3, **dadurch gekennzeichnet, dass** der Stößel (1) eine Abfasung (21) aufweist, um das Öffnen durch elastisches Verbiegen des ersten Bestandteils (5) zu vereinfachen.

5. Federscharnier gemäß Anspruch 3, **dadurch gekennzeichnet, dass** der erste Bestandteil (5) Abfasungen (18) aufweist, um das Öffnen durch sein elastisches Verbiegen zu vereinfachen.

6. Federscharnier gemäß den Ansprüchen 3 und 4, **dadurch gekennzeichnet, dass** die Auslösehaken (19) des ersten Bestandteils (5) und die Abfasung (21) des Stößels (1) eine einander entsprechende Form aufweisen.

7. Federscharnier gemäß Anspruch 3, **dadurch gekennzeichnet, dass** eine Bohrung für die Rotationsachse (13) des ersten Bestandteils (5) einen solchen Abstand von dem oder den Auslösehaken (19) des Sitzes (15) aufweist, dass ein axialer Versatz bezüglich einer Bohrung für die Rotationsachse (13) des zweiten Bestandteils (9) begrenzt ist.

8. Federscharnier gemäß Anspruch 3, **dadurch gekennzeichnet, dass** der erste Bestandteil (5) einen Sitz (15) zur Aufnahme eines Längsabschnittes (10) des Stößels (1) aufweist, der gegenüber der Rotationsachse (13) versetzt ist, und mit einer Öffnung (29) zur Aufnahme eines Querabschnittes (12) des Stößels (1) versehen ist, welcher von der Kraft der Feder (3) gegen den zweiten Bestandteil (9) gepresst wird.

9. Federscharnier gemäß Anspruch 8, **dadurch gekennzeichnet, dass** der Sitz (15) des ersten Bestandteils (5) an einer Seite (E) geschlossen und zur Aufnahme des Querabschnittes (12) des Stößels (1) nur durch eine Öffnung (29) der gegenüber liegenden Seite (I) eingerichtet ist, wobei der Stößel (10, 12) L-förmig ausgebildet ist.

10. Federscharnier gemäß Anspruch 9, **dadurch gekennzeichnet, dass** der Sitz (15) von einer Wand (27) des Sitzes (15) abgeschlossen ist, die den Längsabschnitt (10) des Stößels (1) führt und in der normalen, geöffneten Stellung des Arms (11) durch den zweiten Bestandteil (9) verlängert wird.

11. Federscharnier gemäß Anspruch 9 oder 10, **dadurch gekennzeichnet, dass** der Sitz (15) an einer Seite (E) des ersten Bestandteils abgeschlossen ist, die der Seite des Gestells entspricht, die von einem Dritten beim Tragen des Gestells durch einen Benutzer betrachtet wird.

## Claims

1. Method for fitting a resilient hinge of a spectacle frame, comprising a step for putting a spring (3) thruster (1) into place in a first component (5) and a step for articulating the first component (5) on a second component (9) via a rotational shaft (13) such that an arm (11) of the frame, which is integral with one (9) of the components, is pivoted relative to a surface of the frame which is integral with the other component (5) by displacing the thruster (1) in the first component (5) against the compression of the spring (3), the first component (5) comprising a receptacle (15) which is designed to receive the spring (3) thruster (1) and two knuckles (17) which project relative to the receptacle (15), **characterised in that** the first component (5) is opened by resilient deformation by moving the two knuckles (17) and the receptacle (15) apart and the spring (3) thruster (1) is introduced into the receptacle (15) of the first component (5) until the receptacle (15) closes around the thruster (1) such as to retain the latter by resilient gripping against the compression of the spring (3).

2. Method for fitting according to claim 1, **characterised in that** the first component (5) is forced open by means of the thruster (1).

3. Resilient hinge of a spectacle frame which is designed to be fitted according to the fitting method of claim 1 or claim 2, comprising a first (5) and a second (9) component which are articulated via a rotational shaft (13) such that an arm (11) of the frame, which is integral with one (9) of the components, is pivoted relative to a surface of the frame which is integral with the other component by displacing a spring (3) thruster (1) which is disposed in a receptacle (15) of the first component (5) against the compression of a spring (3), the first component comprising two knuckles (17) which project relative to the receptacle (15), **characterised in that** the two knuckles (17) and the receptacle (15) move apart in order to open the first component (5) resiliently when the thruster (1) is introduced into this receptacle, which is provided with one or two kinks (19) which form a retention stop for the thruster (1) against the compression of the spring (3) when the receptacle (15) of the first component (5) closes by resilient gripping around the thruster (1).

4. Resilient hinge according to claim 3, **characterised in that** the thruster (1) has a chamfer (21) to facilitate opening of the first component (5) by resilient deformation.

5. Resilient hinge according to claim 3, **characterised in that** the first component (5) has chamfers (18) to facilitate its opening by resilient deformation.

6. Resilient hinge according to claim 3 and claim 4, **characterised in that** the kinks (19) of the first component (5) and the chamfer (21) of the thruster (1) have a corresponding shape.

7. Resilient hinge according to claim 3, **characterised in that** a bore in the first component (5) for the rotational shaft (13) is spaced from the kink(s) (19) of the receptacle (15), such as to limit axial offsetting relative to a bore for the rotational shaft (13) of the second component (9).

8. Resilient hinge according to claim 3, **characterised in that** the first component (5) has a receptacle (15) which receives a longitudinal part (10) of the thruster (1) whilst being offset relative to the rotational shaft (13) and open (29) in order to receive a transverse part (12) of the thruster (1) which is pressed against the second component (9) by the compression of the spring (3).

9. Resilient hinge according to claim 8, **characterised in that** the receptacle (15) of the first component (5) is closed on one side (E) and receives the transverse part (12) of the thruster (1) only via an aperture (29) in the opposite side (I), the thruster (10, 12) having the shape of an "L".

10. Resilient hinge according to claim 9, **characterised in that** the receptacle (15) is closed by a wall (27) of the receptacle (15) which guides the longitudinal part (10) of the thruster (1) and is extended in the continuity of the second component (9) when the arm (11) is in the position of normal opening.

11. Resilient hinge according to claim 9 or claim 10, **characterised in that** the receptacle (15) is closed on one side (E) of the first component which corresponds to the side of the frame which is seen by a third party when the frame is worn by a user.
